# FASCICULE DE BREVET EUROPEEN

(11) **EP 2 334 918 B1**
(45) Date de publication et mention de la délivrance du brevet: **22.05.2019**
(21) Numéro de dépôt: 09740507.0
(22) Date de dépôt: 31.08.2009
(51) Int. Cl.: F01P 3/20, F01N 3/04, F02F 1/24, F01P 11/04, F01P 3/02

(54) **CULASSE DE MOTEUR A COMBUSTION INTEGRANT UN COLLECTEUR D'ECHAPPEMENT**
ZYLINDERKOPF FÜR EINE BRENNKRAFTMASCHINE MIT EINEM ABGASKRÜMMER
CYLINDER HEAD FOR A COMBUSTION ENGINE INCLUDING AN EXHAUST MANIFOLD

(30) Priorité: 18.09.2008 FR 0856288
(43) Date de publication de la demande: 22.06.2011
(73) Titulaire: PSA Automobiles SA, 78300 Poissy (FR); GM Global Technology Operations LLC, Detroit, MI 48265-3000 (US)
(72) Inventeur: CHARTIE, Vincent, F-75011 Paris (FR); RAES, Gregory, F-94100 Saint Maur Des Fosses (FR)
(86) Numéro de dépôt international: PCT/FR2009/051646
(87) Numéro de publication internationale: WO 2010/031939

(56) Documents cités:
- JP-A- 2005 188 351
- US-A1- 2002 026 909
- US-A1- 2003 098 005

## Description

La présente invention revendique la priorité de la demande française 0856288 déposée le 18 septembre 2008 dont le contenu (texte, dessins et revendications) est ici incorporé par référence.

La présente invention concerne une culasse de moteur à combustion intégrant un collecteur d'échappement.

Conventionnellement les dispositifs d'échappement comportent des conduits d'échappements formés dans la culasse du moteur à combustion interne multicylindre d'un véhicule automobile coïncidant avec des conduits d'un collecteur d'échappement agencés en regard des conduits d'échappement. Le collecteur d'échappement comporte au moins un conduit de sortie qui est relié à une ligne d'échappement du véhicule automobile.

Dans le but de diminuer la teneur en produits polluants contenus dans les gaz de combustion, il est connu d'implanter dans la ligne d'échappement un dispositif de dépollution. Cependant, l'efficacité de ce dispositif est fortement tributaire de sa température de fonctionnement. L'éloignement de ce dispositif des chambres de combustion du moteur retarde la montée en température du dispositif pendant les premières minutes d'utilisation du véhicule, et réduit son efficacité ; or c'est pendant les premières minutes de fonctionnement du moteur que la plus grande quantité de produit polluant est émise.

Pour remédier à cet inconvénient, à l'exemple du document JP2005188351, on a proposé de réaliser des collecteurs d'échappement qui sont partiellement ou totalement intégrés à la culasse du moteur à combustion, ce qui permet de réduire considérablement la distance entre les chambres de combustion et le dispositif de dépollution, qui est alors proche de la sortie du collecteur.

Cependant, les collecteurs connus de l'état de la technique posent de nombreux problèmes.

En effet, lorsqu'un collecteur de ce type n'est que partiellement formé dans la culasse, la distance entre les chambres de combustion et le dispositif de dépollution n'est p as suffisamment réduite afin de permettre une efficacité totale du dispositif de dépollution.

Par ailleurs, lorsque le collecteur est intégré à la culasse, il est soumis à des fortes contraintes de températures et se trouve donc, comme le matériau de la culasse, sujet à une importante dilatation thermique au fur et à mesure de sa montée en température. De ce fait il est pratiquement impossible d'accoupler un tel collecteur au reste de la ligne d'échappement s'il n'est pas pourvu de cavités de refroidissement reliées aux cavités de circulation de liquide de refroidissement de la culasse.

Cependant, la présence de cavités de refroidissement ne permet pas de refroidir suffisamment la bride permettant la fixation de la ligne d'échappement sur le collecteur intégré qui est soumise aux mêmes dilatations thermiques, ce qui ne permet pas de tenir les exigences de tenue thermomécanique de cette pièce.

Dans ce contexte, l'invention vise à fournir une culasse d'un moteur à combustion intégrant un collecteur d'échappement permettant le refroidissement efficace du collecteur d'échappement ainsi que de la bride de fixation du conduit d'échappement.

A cette fin, l'invention propose une culasse d'un moteur à combustion intégrant un collecteur d'échappement, la culasse comportant un moyen de fixation d'un conduit d'échappement des gaz de combustion et un circuit de refroidissement du collecteur d'échappement, caractérisée en ce que le circuit de refroidissement comporte deux déflecteurs disposé à l'intérieur dudit circuit de sorte à accélérer et modifier la direction de circulation du fluide caloporteur pour le diriger vers les bords extérieurs du circuit de refroidissement (40) en contact avec ledit moyen de fixation. On désigne par le déflecteur tout corps permettant de modifier la direction du courant d'un fluide.

Outre les caractéristiques principales qui viennent d'être mentionnées dans le paragraphe précédent, le collecteur d'échappement intégré à une culasse moteur de véhicule automobile selon l'invention peut présenter une ou plusieurs caractéristiques supplémentaires ci-dessous.

Ainsi, dans une variante, ledit au moins un déflecteur est solidaire de la culasse.

Dans une variante, la culasse comporte une pluralité de circuits de refroidissement pour le refroidissement dudit collecteur d'échappement.

Dans une variante, la culasse comporte un second circuit de refroidissement pour le refroidissement de ladite culasse dans lequel circule un fluide caloporteur.

Dans une variante, le collecteur d'échappement communique avec une pluralité de conduits d'échappement.

Dans une variante, le collecteur d'échappement communique avec un conduit de sortie, qui avantageusement, communique avec le conduit d'échappement apte à l'extraction de gaz de combustion au moyen du moyen de fixation.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une représentation schématique d'une culasse d'un moteur à combustion intégrant un collecteur d'échappement de véhicule automobile selon l'invention ;
- la figure 2 est une représentation en perspective d'une culasse d'un moteur à combustion d'un véhicule automobile intégrant un collecteur d'échappement selon un premier plan de coupe horizontal ;
- la figure 3 est une représentation en perspective de la culasse d'un moteur à combustion d'un véhicule automobile intégrant un collecteur d'échappement selon un deuxième plan de coupe horizontal.

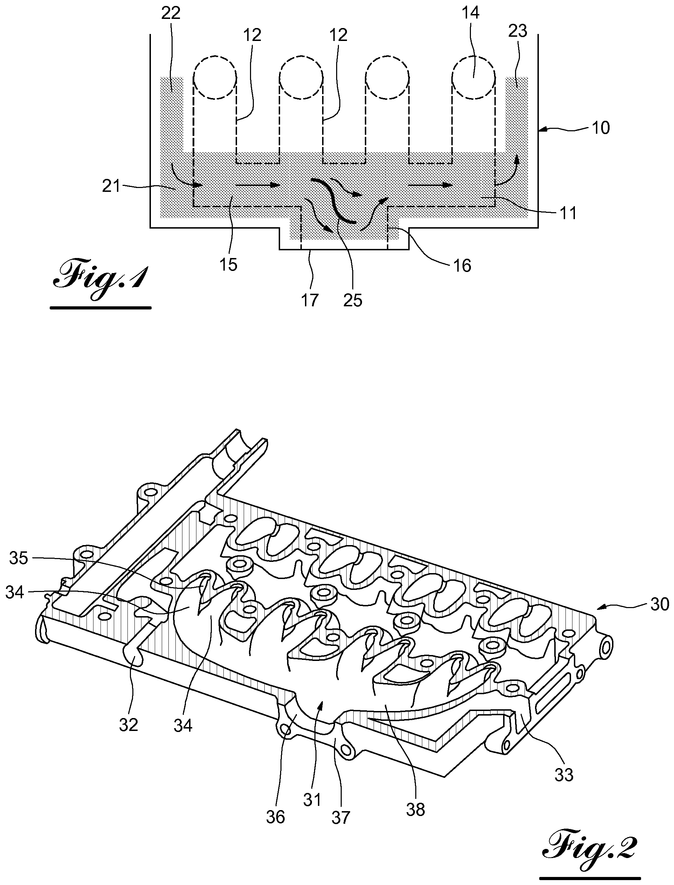

La figure 1 est une représentation schématique en vue de dessus d'une culasse d'un moteur à combustion intégrant un collecteur d'échappement de véhicule automobile selon l'invention.

La figure 1 représente particulièrement une culasse 10 de moteur à combustion interne comportant une pluralité de conduits d'échappement 12 agencés dans ladite culasse 10. Une première extrémité 14 de chaque conduit 12 est reliée à une chambre de combustion (non représentée) du moteur et la seconde extrémité de chaque conduit 12 débouche dans une cavité 15 ou plénum d'un collecteur 11 d'échappement intégré à la culasse 10.

Un conduit de sortie 16 prolongeant le collecteur 11 d'échappement est relié extérieurement au moyen d'une bride de fixation 17 à une ligne d'échappement (non représentée) comportant un dispositif de dépollution des gaz d'échappement.

La culasse 10 comporte entre chaque chambre de combustion des cavités (non représentées) permettant la circulation d'un fluide de refroidissement pour le refroidissement du moteur et notamment de la culasse du moteur.

La culasse 10 comporte également un circuit de refroidissement 21 spécifique situé dans la partie supérieure et/ou dans la partie inférieure de la culasse 10, et plus précisément au dessus et/ou en dessous des conduits d'échappement 12. Le circuit de refroidissement 21 spécifique permet de refroidir le collecteur d'échappement 11 soumis à de fortes contraintes de température à mesure de la montée en température du moteur.

Le circuit de refroidissement 21 est formé par des cavités réalisées à l'intérieur de la culasse 10 et comporte une entrée 22 pour l'alimentation en fluide de refroidissement du circuit de refroidissement et une sortie 23 créant ainsi un sens de circulation illustré par les flèches.

Afin de refroidir convenablement le conduit de sortie 16 et plus précisément la bride de fixation 17, le circuit de refroidissement 21 comporte au moins un déflecteur 25 dont la forme spécifique et la disposition dans le circuit de refroidissement 21 permettent de créer un flux de fluide de refroidissement en direction de la zone en retrait correspondant au conduit de sortie 16 et à la bride de fixation 17.

En effet, les formes connues de circuit de refroidissement de collecteurs d'échappement intégrés à la culasse ne permettent pas de fournir des débits de circulation du fluide de refroidissement suffisant au niveau de la zone du circuit proche du conduit de sortie 16 et de la bride de fixation 17.

L'utilisation d'au moins un déflecteur 25 permet ainsi de conserver les formes principales du circuit de refroidissement en conservant notamment une zone située au plus proche de la bride de fixation 17. Le déflecteur 25 crée ainsi un débit de circulation supplémentaire de fluide de refroidissement, avec notamment une accélération de ce fluide dans la zone de la bride 17 où le débit de fluide est relativement nul sans la présence de ce déflecteur 25.

La figure 2 est une représentation particulière en perspective d'une culasse 30 d'un moteur à combustion d'un véhicule automobile intégrant un collecteur d'échappement 31 selon un plan de coupe horizontal.

Le plan de coupe est réalisé sensiblement au niveau du plan médian du collecteur d'échappement 31 intégré à la culasse 30.

Le collecteur d'échappement 31 comporte une pluralité de conduits d'échappement 34 agencés dans ladite culasse 30 dont la première extrémité 35 est reliée à la chambre de combustion du moteur et dont la deuxième extrémité débouche dans une cavité 38 du collecteur 31. Le collecteur 31 débouche ensuite dans un conduit de sortie 36 relié à un moyen de dépollution d'une ligne d'échappement au moyen d'une bride de fixation 37.

La culasse 30 comporte également un circuit de refroidissement de la culasse dans lequel circule un fluide de refroidissement. Le circuit de refroidissement permet la circulation du fluide entre chaque chambre de combustion au moyen de cavités prévues dans la culasse 30 et dont l'entrée et la sortie du circuit de refroidissement sont illustrée respectivement par les références 32 et 33.

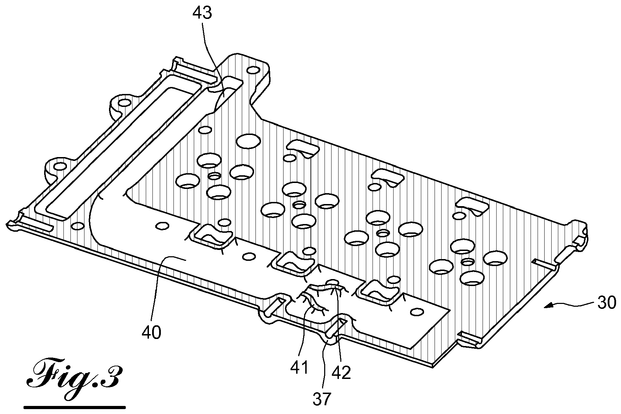

La figure 3 est une représentation en perspective de la culasse 30 d'un moteur à combustion d'un véhicule automobile intégrant un collecteur d'échappement 31 selon un deuxième plan de coupe horizontal.

Le plan de coupe est réalisé sensiblement en partie inférieur de la culasse 30 et plus précisément dans une zone située en dessous du collecteur d'échappement 31, illustrée en référence à la figure 2.

La figure 3 illustre particulièrement un circuit de refroidissement spécifique 40 assurant le refroidissement du collecteur d'échappement 31 et de la bride de fixation 37 en partie inférieure de la culasse 30.

Le circuit de refroidissement spécifique 40 de refroidissement du collecteur d'échappement 31 et de la bride de fixation 37 comporte une entrée 43 en fluide de refroidissement, le fluide de refroidissement circulant à l'intérieur du circuit de refroidissement spécifique 40 selon le sens indiqué par les flèches illustrées à la figure 3.

La culasse comporte au niveau de ce circuit de refroidissement spécifique 40 un premier déflecteur 41 et un deuxième déflecteur 42 permettant de modifier la circulation du fluide de refroidissement dans une zone du circuit comportant des renfoncements, notamment au niveau de la bride de fixation 37. Ainsi les déflecteurs 41 et 42 permettent d'orienter la circulation du fluide de refroidissement vers les bords extérieurs du circuit de refroidissement 40 qui sont notamment en contact avec la bride de fixation 37 et permettant d'accélérer la circulation du fluide de refroidissement dans ces zones de façon à augmenter le rendement de refroidissement de la bride de fixation 37.

Avantageusement, la culasse 30 comporte un deuxième circuit de refroidissement spécifique 40 pour le refroidissement du collecteur d'échappement et de la bride de fixation situés en partie supérieur de la culasse 30, au dessus du collecteur d'échappement.

Ainsi selon l'invention, la culasse permet d'améliorer le refroidissement du collecteur d'échappement, le refroidissement de la bride de fixation de la ligne d'échappement, avec notamment la présence d'au moins un déflecteur à l'intérieur du circuit de refroidissement spécifique du collecteur d'échappement intégré.

Ce déflecteur permet ainsi de faire passer plus d'énergie dans les gaz d'échappement dans les conduits d'échappement, ce qui autorise l'augmentation des performances des moteurs à combustion interne comportant des collecteurs d'échappement intégrés aux culasses moteur, notamment dans le cas où les performances moteur sont limitées par l'énergie thermique des gaz d'échappement.

Les autres avantages de l'invention sont notamment la possibilité d'étendre le concept de collecteur intégré à une culasse dans des moteurs plus performants et une baisse de la consommation de carburant.

La présente invention a été plus particulièrement décrite dans le cadre d'une culasse d'un moteur thermique équipant un véhicule automobile mais peut également s'appliquer à des moteurs thermiques stationnaires ou équipant d'autres types de véhicules tels que des moteurs marins ou de motos.

## Revendications

1. Culasse (10, 30) d'un moteur à combustion intégrant un collecteur d'échappement (11, 31), ladite culasse (10, 30) comportant un moyen de fixation (17, 37) d'un conduit d'échappement des gaz de combustion et un circuit de refroidissement (21, 40) dudit collecteur d'échappement (11, 31), **caractérisée en ce que** ledit circuit de refroidissement (21, 40) comporte deux déflecteurs (25, 41, 42) disposés à l'intérieur dudit circuit de sorte à accélérer et modifier la direction de circulation du fluide caloporteur pour le diriger vers les bords extérieurs du circuit de refroidissement (40) en contact avec ledit moyen de fixation (17, 37).

2. Culasse (10, 30) selon la revendication 1 **caractérisée en ce que** ledit au moins un déflecteur (25, 41, 42) est solidaire de ladite culasse (10, 30).

3. Culasse (10, 30) selon la revendication 1 ou la revendication 2, **caractérisée en ce qu'**elle comporte une pluralité de circuits de refroidissement (21, 40) pour le refroidissement dudit collecteur d'échappement (11, 31).

4. Culasse (10, 30) selon l'une quelconque des revendications 1 à 2 **caractérisée en ce qu'**elle comporte un second circuit de refroidissement pour le refroidissement de ladite culasse (10, 30) dans lequel circule un fluide caloporteur.

5. Culasse (10, 30) selon l'une quelconque des revendications 1 à 4 **caractérisée en ce que** ledit collecteur d'échappement (11, 31) communique avec une pluralité de conduits d'échappement (12, 34).

6. Culasse (10, 30) selon l'une quelconque des revendications 1 à 5 **caractérisée en ce que** ledit collecteur d'échappement (11, 31) communique avec un conduit de sortie (16, 36).

7. Culasse selon la revendication 6 **caractérisée en ce que** ledit conduit de sortie (16, 36) communique avec ledit conduit d'échappement apte à l'extraction de gaz de combustion au moyen dudit moyen de fixation, ledit moyen de fixation étant du type bride de fixation (17, 37).

8. Moteur à combustion comportant une culasse conforme à l'une quelconque des revendications précédentes.

9. Véhicule automobile équipé d'un moteur à combustion conforme à la revendication 8.

## Patentansprüche

1. Zylinderkopf (10, 30) einer Brennkraftmaschine, die einen Abgaskrümmer (11, 31) integriert, wobei der Zylinderkopf (10, 30) ein Mittel zum Befestigen (17, 37) einer Abgasleitung der Verbrennungsgase und einen Kühlkreislauf (21, 40) des Abgaskrümmers (11, 31) umfasst, **dadurch gekennzeichnet, dass** der Kühlkreislauf (21, 40) zwei Ablenker (25, 41, 42) umfasst, die in dem Inneren des Kreislaufs derart angeordnet sind, dass die Zirkulationsrichtung des Kühlfluids zum Lenken zu den äußeren Rändern des Kühlkreislaufs (40) in Berührung mit dem Befestigungsmittel (17, 37) beschleunigt und geändert wird.

2. Zylinderkopf (10, 30) nach Anspruch 1, **dadurch gekennzeichnet, dass** der mindestens eine Ablenker (25, 41, 42) fest mit dem Zylinderkopf (10, 30) verbunden ist.

3. Zylinderkopf (10, 30) nach Anspruch 1 oder Anspruch 2, **dadurch gekennzeichnet, dass** er eine Mehrzahl von Kühlkreisläufen (21, 40) für das Kühlen des Abgaskrümmers (11, 31) umfasst.

4. Zylinderkopf (10, 30) nach einem der Ansprüche 1 bis 2, **dadurch gekennzeichnet, dass** er einen zweiten Kühlkreislauf für das Kühlen des Zylinderkopfs (10, 30), in dem ein Kühlfluid zirkuliert, umfasst.

5. Zylinderkopf (10, 30) nach einem der Ansprüche 1 bis 4, **dadurch gekennzeichnet, dass** der Abgaskrümmer (11, 31) mit einer Mehrzahl von Abgasleitungen (12, 34) in Kommunikation steht.

6. Zylinderkopf (10, 30) nach einem der Ansprüche 1 bis 5, **dadurch gekennzeichnet, dass** der Abgaskrümmer (11, 31) mit einer Ausgangsleitung (16, 36) in Kommunikation steht.

7. Zylinderkopf nach Anspruch 6, **dadurch gekennzeichnet, dass** die Ausgangsleitung (16, 36) mit der Abgasleitung, die für das Extrahieren von Verbrennungsgasen mittels des Befestigungsmittels geeignet ist, in Kommunikation steht, wobei das Befestigungsmittel vom Typ Befestigungsflansch (17, 37) ist.

8. Brennkraftmaschine, die einen Zylinderkopf nach einem der vorstehenden Ansprüche umfasst.

9. Kraftfahrzeug, das mit einer Brennkraftmaschine nach Anspruch 8 ausgestattet ist.

## Claims

1. A cylinder head (10, 30) of a combustion engine that includes an exhaust manifold (11, 31), said cylinder head (10, 30) comprising a means (17, 37) for securing a combustion gas exhaust duct and a cooling circuit (21, 40) of said exhaust manifold (11, 31), **characterized in that** said cooling circuit (21, 40) comprises two deflectors (25, 41, 42) arranged in the interior of said circuit so as to accelerate and modify the flow direction of the coolant fluid in order to direct it towards the exterior edges of the cooling circuit (40) in contact with said securing means (17, 37).

2. The cylinder head (10, 30) according to Claim 1, **characterized in that** said at least one deflector (25, 41, 42) is integral with said cylinder head (10, 30).

3. The cylinder head (10, 30) according to Claim 1 or Claim 2, **characterized in that** it comprises a plurality of cooling circuits (21, 40) for the cooling of said exhaust manifold (11, 31).

4. The cylinder head (10, 30) according to any one of Claims 1 to 2, **characterized in that** it comprises a second cooling circuit for the cooling of said cylinder head (10, 30) in which a coolant fluid flows.

5. The cylinder head (10, 30) according to any one of Claims 1 to 4, **characterized in that** said exhaust manifold (11, 31) communicates with a plurality of exhaust ducts (12, 34).

6. The cylinder head (10, 30) according to any one of Claims 1 to 5, **characterized in that** said exhaust manifold (11, 31) communicates with an outlet duct (16, 36) .

7. The cylinder head according to Claim 6, **characterized in that** said outlet duct (16, 36) communicates with said exhaust duct suitable for the extraction of combustion gas by means of said securing means, said securing means being of the securing clamp type (17, 37) .

8. A combustion engine comprising a cylinder head according to any one of the preceding claims.

9. A motor vehicle equipped with a combustion engine according to Claim 8.
